# EUROPEAN PATENT APPLICATION

(11) **EP 4 575 685 A1**
(43) Date of publication of application: **25.06.2025**
(21) Application number: 23867095.4
(22) Date of filing: 11.07.2023
(51) Int. Cl.: G05B 19/042

(54) **CONTROL SYSTEM AND PROCESSING METHOD FOR INTELLIGENT WALL SWITCH, AND INTELLIGENT WALL SWITCH**

(30) Priority: 21.09.2022 CN 202211152247
(71) Applicant: Wuhan Linptech Co., Ltd., Wuhan, Hubei 430000 (CN)
(72) Inventor: CHENG, Xiaoke, Wuhan, Hubei 430000 (CN)
(74) Representative: Chung, Hoi Kan
(86) International application number: PCT/CN2023/106713
(87) International publication number: WO 2024/060800

(57) **Abstract**

The invention provides a control system and a processing method for an intelligent wall switch, and the intelligent wall switch, the control system including: a first switch electrically connected to a power supply loop of a first electrical appliance and configured to control connecting and disconnecting of the power supply loop in response to an implement control operation; a second switch including at least one key for receiving an implement control operation; and a signal transmitting unit operatively coupled to the key and configured to send out a wireless control signal in response to the implement control operation received at the key. The first switch and the second switch both include at least one power supply port for accessing a live wire so as to access a strong electric power source, and the second switch performs wireless interaction with the first switch in a direct connection manner. The first switch further includes a signal receiving unit configured to of receive and control an working state of the first electrical appliance in response to the wireless control signal.

## Description

### Technical Field

The invention relates to the field of intelligent switches, and more particularly to a control system, a processing method and an intelligent wall switch.

### Background Art

The wall switch refers to an electric appliance switch installed on a wall to switch on and off an electric circuit to control the switch of the electric appliance.

With the development of intelligence, the intelligent wall switch has been widely used. The intelligent wall switch can be understood as a wall switch having data processing capability. Meanwhile, the intelligent wall switch can be configured with a processor for performing data processing and a wireless communication module for performing wireless communication to the outside.

However, the existing intelligent wall switch is generally used as a controlled part, with a relatively single control mode, which is difficult to meet more diverse control requirements.

### Summary of the Invention

The invention provides a control system and processing method for an intelligent wall switch and the intelligent wall switch, so as to solve the problem of a relatively single control mode of the intelligent wall switch in the prior art.

According to a first aspect of the invention, a control system for an intelligent wall switch is provided, including:
a first switch configured for controlling an operating state of a first electrical appliance in response to an actuation or controlling an operating state of a first electrical appliance in response to a wireless control signal, the first switch being powered by a strong current; and
a second switch powered by the strong current, wirelessly interacting with the first switch in a direct connection manner, and configured to generate and send the wireless control signal in response to an implement control operation.

According to a second aspect of the invention, a processing method for an intelligent wall switch system is provided. The intelligent wall switch system includes at least a first switch and a second switch; the first switch and the second switch are both powered by the strong current. The processing method includes the steps that the first switch enters a pairing mode in response to a pairing operation, and sends out a pairing message.

The second switch receives the pairing message, and within a specified time after the first switch enters the pairing mode, the second switch enters the pairing mode in response to a pairing operation so as to complete the pairing with the first switch.

According to a third aspect of the invention, an intelligent wall switch for performing the processing method as described above is provided.

The control system and processing method for the intelligent wall switch, and the intelligent wall switch provided in the invention establish a wireless interaction relationship by means of direct connection by using a first switch and a second switch both powered by the strong current. When the first switch receives a wireless control signal sent by the second switch in response to an implement control operation, the first switch controls the operating state of the first electrical appliance connected thereto so as to match a control result indicated by the wireless control signal, thereby achieving mutual control between the intelligent wall switches powered by the strong current and effectively extending the control mode of the intelligent wall switch, which is convenient to meet more diverse control requirements.

### Brief Description of the Drawings

In order to more clearly describe the technical solutions in the examples of the disclosure or the prior art, the drawings to be used in the description of the examples or the prior art will be briefly introduced below. It will be apparent to those skilled in the art that the drawings in the following description are only some of the disclosure, and that other drawings may be obtained from the drawings without any creative works.
Fig. 1 is a schematic view showing a configuration of a control system according to an example of the invention;
Fig. 2 is a schematic view showing a configuration of a first switch according to an example of the invention;
Fig. 3 is a schematic view I showing the mutual control of a first switch and a second switch according to an example of the invention;
Fig. 4 is a schematic view II showing the mutual control of the first switch and the second switch according to an example of the invention;
Fig. 5 is a schematic view I showing the pairing of a first switch, a second switch and a third switch according to an example of the invention;
Fig. 6 is a schematic view II showing the pairing of the first switch, the second switch and the third switch according to an example of the invention;
Fig. 7 is a schematic flow view showing the pairing of a key A of the first switch and a key B of the second switch according to an example of the invention;
Fig. 8 is a schematic flow view showing a control network in which a key C of the third switch is added to the key A of the first switch and the key B of the second switch according to an example of the invention;
Fig. 9 is a schematic flow view of the key A of the first switch after entering a learning mode according to an example of the invention;
Fig. 10 is a schematic flow view showing the mutual control of the key A of the first switch and the key B of the second switch according to an example of the invention; and
Fig. 11 is a schematic flow view of a processing method for an intelligent wall switch system according to an example of the invention.

### Detailed Description of the Invention

The technical solutions in the examples of the invention will be described clearly and completely in conjunction with the accompanying drawings in the examples of the invention. Obviously, the described examples are only part of the examples of the invention, rather than all of the examples. Based on the examples in the invention, all other examples obtained by a person skilled in the art without involving any inventive effort are within the scope of protection of the invention.

The terms "first", "second", "third", "fourth", and the like in the description and the claims of the invention and in the above-described figures, if any, are used for distinguishing between similar objects and not necessarily for describing a particular sequential or chronological order. It should be understood that the data so used may be interchanged, where appropriate, so that the examples of the invention described herein can be implemented in an order other than those illustrated or described herein. Furthermore, the terms "comprises" and "comprising", as well as any variations thereof, are intended to cover a non-exclusive inclusion, such that a process, a method, a system, a product, or a device that includes a list of steps or elements are not necessarily limited to those steps or elements expressly listed, but may include other steps or elements not expressly listed or inherent to such process, method, article, or device.

Hereinafter, technical solutions of the invention will be described in detail with reference to specific examples. The following specific examples may be combined with one another, and the same or similar concepts or processes may not be repeated in some embodiments.

When the existing electric appliances are controlled, the traditional switch can only directly control the on-off of the switch access line and then control the on-off of the electric appliances by the user's pressing. With the intelligent application, the intelligent controller such as the intelligent wall switch has gradually replaced the traditional switch. The intelligent wall switch is provided with a wireless communication circuit, which can not only directly control the line on-off according to the user's pressing, but also realize the sending and receiving of wireless signals based on the built-in wireless communication circuit. For example, it can control the line on-off by receiving external wireless signals and then realize the wireless control of the intelligent wall switch.

The inventors of the present application have found that since an intelligent wall switch is required to send or receive a wireless signal in real time, when a power supply line of the electrical appliance is controlled to be on/off by the intelligent wall switch, the intelligent wall switch also is required to perform specific control on the power supply line so as to draw power from the power supply line to maintain the operation of the wireless communication circuit, thereby achieving real-time reception of the wireless signal. However, when two intelligent wall switches are linked to control electrical appliances by means of wiring, it is difficult to coordinate the two intelligent wall switches to draw power from the wiring line at the same time, and then the real-time power supply of the wireless communication circuit in each intelligent wall switch cannot be ensured, so that the intelligent wall switches cannot work normally. For example, in the conventional double-control of an electric lamp, a single-pole double-throw switch provided respectively at a doorway and a bedside is usually used to control the on-off of the power supply line of the electric lamp. When any one of the single-pole double-throw switches at the doorway and the bedside is operated, the power supply line of the electric lamp is directly switched on or off, thereby realizing the double-control of the electric lamp. In addition, a module in an intelligent wall switch for controlling the on-off of a power supply line, such as a relay, only supports two control states of on-off, and cannot realize the control characteristic of the single-pole double-throw switch. For example, if any single-pole double-throw switch is controlled, the on-off change of the line occurs. Furthermore, if two intelligent wall switches are used to perform double-control on the electric lamp, when one of the intelligent wall switches is disconnected from the power supply line, the other intelligent wall switch cannot obtain power normally. Thus, the wireless communication circuit in the intelligent wall switch cannot work normally and receive a wireless signal, without achieving the intelligent control. It can be seen that two intelligent wall switches cannot be used to replace the traditional two single-pole double-throw switches to achieve linkage control.

Therefore, in the existing wireless control of an intelligent wall switch, it is usually realized by additionally adapting a wireless switch thereto. For example, when the intelligent wall switch is used to perform double-control on lamps and lanterns, an intelligent wall switch accesses a circuit where the lamps and lanterns are located, and a user can realize the on-off control on the lamps and lanterns by pressing the intelligent wall switch. A wireless switch adapted to the intelligent wall switch is freely arranged at any position, so that the user can realize the control on the intelligent wall switch by pressing the wireless switch so as to control the on-off of the lamps and lanterns.

However, the inventors of the present application have also found that using a wireless switch to control an intelligent wall switch has the following disadvantages. There are two main types of wireless switches currently available, one is a battery-powered wireless switch and the other is a self-generating powered wireless switch. However, for a wireless switch powered by a battery, the battery is required to be replaced frequently, which brings inconvenience to users. With regard to a wireless switch powered by self-generation, since it is required to obtain electric energy by pressing, the pressing stroke thereof is greater than that of a battery switch and a strong electric switch, resulting in a user having a poor hand feeling when using same. In addition, since both the self-generating switch and the battery switch need to save electric energy, a constant light indication of a state indication lamp is generally not provided, and thus the user cannot learn the switch state of a controlled device by observing the state indication lamp. In summary, the existing solutions for controlling an intelligent wall switch by a wireless switch cannot fully achieve the user experience of a traditional double-control switch. In addition, both the battery wireless switch and the self-generating switch are a control device specially configured for an intelligent wall switch. For example, if a user is required to realize double-control of a lamp via the intelligent wall switch, a wireless switch is required to be specially configured for the intelligent wall switch, which increases the application cost of the intelligent wall switch.

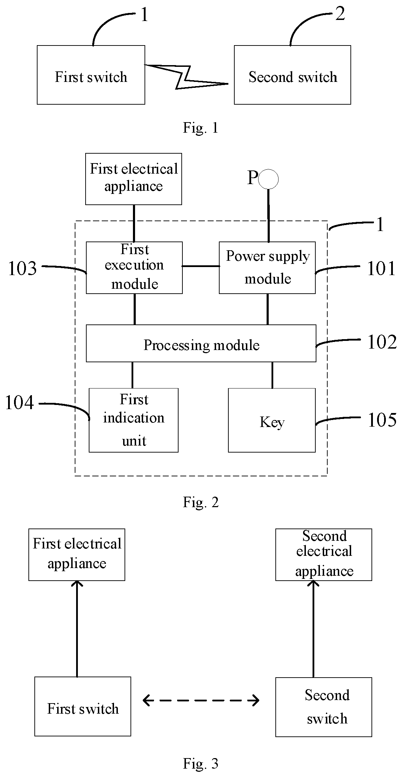

Based on this, the embodiment provides a control system for solving the above technical problem. As shown in Fig. 1, the control system includes at least a first switch 1 and a second switch 2. The first switch 1 and the second switch 2 therein can be any device or a combination of devices which can be controlled to achieve on-off control, are provided with a circuit having data processing capability, such as a processing module, and are also provided with a circuit having wireless communication capability, such as a wireless communication module. In one example thereof, it can be an intelligent wall switch. The external communication mode of the intelligent wall switch may include at least one of radio frequency, Bluetooth, Wifi, mobile network, etc.

The first switch 1 is configured for controlling an operating state of a first electrical appliance in response to an actuation or controlling an operating state of a first electrical appliance in response to a wireless control signal, the first switch being powered by a strong current. The second switch 2 is powered by the strong current, wirelessly interacting with the first switch in a direct connection manner, and configured to generate and sending the wireless control signal in response to an implement control operation. The direct connection mode can be understood to mean that the first switch and the second switch directly perform interactive control, without forwarding via an intermediary device such as a gateway and a router, thereby reducing the delay time of the whole interactive process, and without being affected by the performance and operating state of the intermediary device such as a gateway and a router, so that the stability of mutual control of the first switch and the second switch may be improved.

In the embodiments, the first switch 1 and the second switch 2 are both intelligent wall switches powered by the strong current. As shown in Fig. 2, in some embodiments, the first switch 1 is connected to a circuit for controlling an operating state of a first electrical appliance. The first switch 1 includes a power supply module 101 for taking power from the circuit so as to convert alternating current of strong current into direct current. The first switch 1 further includes a processing module 102 powered by the direct current, and the processing module 102 is electrically connected to the power supply module 101. The first switch 1 further includes a first execution module 103 communicatively connected to the processing module 102 and controls the operating state of the circuit under control of the processing module 102. The first switch 1 operably controls the operating state of the first electrical appliance in response to an actuation. Exemplarily, the first switch 1 is operable to trigger and control the operating state of the first electrical appliance in response to a local actuation, for example by the processing module 102 in response to an implement control operation for the first switch 1, controlling the operating state of the first execution module 103 to match with the implement control operation to control the operating state of the first electrical appliance.

In particular, the first switch 1 further includes at least one power supply port for accessing a live wire, so as to access a strong power source, such as a strong power input end P. The strong power input end P may include a live wire input end and a neutral wire input end. Namely, the intelligent wall switch may be a switch powered by a neutral live wire. In some examples, the strong current input end P may also be a live wire input end, i.e., the intelligent wall switch may be a single live wire powered switch. The power supply module 101 further includes an electric energy conversion unit which is electrically connected to the processing module 102 to convert the incoming strong electric alternating current into a required direct current, and to transmit the required direct current to the processing module 102 so that the processing module 102 operates normally.

Here, one end of the first execution module 103 can be electrically connected to the power supply module 101, and the other end of the first execution module 103 can be electrically connected to the first electrical appliance. Furthermore, the on-off of a circuit where the first electrical appliance is located can be controlled. For example, the first execution module 103 can control the on-off of a live wire or a neutral wire in the circuit where the first electrical appliance is located in response to a drive signal of the processing module 102. In an example, the first execution module 103 employs a relay. In another example, the first execution module 103 is implemented as any module capable of performing the function of adjusting the color, brightness, color temperature, etc. of the light. However, the implementation of the first execution module 103 is not limited to this example. The first execution module 103 may further include any circuit module capable of controlling the on/off of the relay.

The processing module 102 can output a drive signal to the first execution module 103. Accordingly, the first execution module 103 is configured for receiving a drive signal sent by the processing module 102, and driving the on-off of an incoming live wire according to the received drive signal, thereby controlling the on-off of a circuit where the first electrical appliance is located. Here, the processing module 102 may be any circuit capable of data processing and wireless communication, and may include, for example, a processor, a wireless communication unit, a memory, and other related devices. In addition, the processor and the wireless communication unit may be separate units or integrated into one unit. In some embodiments, the processing module may include a signal transmitting unit for sending out a wireless control signal in response to an external manipulation. The processing module may further include a signal receiving unit capable of receiving and controlling the operating state of the first electrical appliance in response to an externally issued wireless control signal.

In an embodiment, the first switch further includes a first indication unit 104 for indicating an operating state of the first switch 1. The first indication unit 104 may be implemented as any element or combination of elements capable of performing a lighting indication function, such as a LED lamp. The first indication unit 104 is electrically connected to the processing module 102, and can externally indicate the operating state of the first switch 1 under the control of the processing module 102. For example, the operating state of the first execution module 103, such as an on-off state of a relay, is externally indicated by means of a prompt mode or a combination of multiple prompt modes, including but not limited to a prompt mode such as a voice prompt mode, a light signal prompt mode (such as the on-off state of a LED lamp), a display interface prompt mode (such as a display screen prompt mode), a specific structure prompt mode (such as a laser having a specific text or pattern to prompt), etc. It enables the user to learn the current operating state of the electrical appliance associated therewith according to the prompt of the first indication unit 104, facilitating the user to implement corresponding control.

In an implementation, the first switch further includes a key 105 and a key identification module (not shown in the figure). The key identification module is electrically connected to the processing module. The key 105 can activate a corresponding key identification module when being pressed. The key identification module can transmit an activation signal to the processing module 102 when touched. The processing module 102 controls the switching on and off of the first execution module 103 according to the activation signal. Furthermore, it is realized that the first switch 1 triggers and controls the operating state of the first electrical appliance in response to local actuation. Herein, the key identification module in the first switch can be a switching device (such as a micro-switch). The activation signal is understood to be any signal that enables the processing module to determine which key is currently pressed. The activation signal may be any one of a high pulse signal, a low pulse signal, a high level signal and a low level signal. The activation signal may also be a plurality of signals, continuous or discontinuous. In whatever form, it does not depart from the scope described above.

In another embodiment, the first switch can also receive an external wireless signal by the wireless communication unit in the processing module 102 thereof, so as to control the on-off of the first execution module 103 according to the wireless signal, thereby controlling the operating state of the first electrical appliance. For example, in the embodiments, the second switch 2 establishes a wireless interaction relationship with the first switch 1 by means of a direct connection, and generates and broadcasts out a wireless control signal when the second switch 2 responds to an implement control operation, e.g., a pressing operation for a key in the second switch. The first switch 1 receives the wireless control signal in a manner of directly receiving a broadcast based on its wireless interaction relationship with the second switch 2, and is capable of controlling the operating state of the first electrical appliance in response to the wireless control signal.

Herein, the second switch 2 establishes a wireless interaction relationship with the first switch 1 in a direct connection manner. In some embodiments, the second switch 2 can directly connect with the first switch 1 via a custom communication protocol. For example, the custom communication protocol can be a non-standard communication protocol such as a non-standard Bluetooth communication protocol. The second switch 2 can directly connect with the first switch 1 via the non-standard Bluetooth communication protocol. When the second switch 2 directly communicates with the first switch 1, an interactive wireless control signal is a non-standard Bluetooth data signal. For example, a custom communication protocol, such as a non-standard Bluetooth communication protocol, is stored in both the first switch 1 and the second switch 2. After completing pairing codes to pair, the first switch 1 and the second switch 2 can establish a direct wireless interaction relationship. When the second switch 2 responds to an implement control operation, a processing module inside the second switch 2 encodes and generates a wireless control signal based on the custom communication protocol, and broadcasts out the wireless control signal by a wireless communication unit inside the second switch 2. For example, a broadcast channel 37 and a broadcast channel 39, or a broadcast channel 39 within a Bluetooth communication frequency range repeatedly transmits the wireless control signal a plurality of times continuously or at intervals. After directly receiving the wireless control signal broadcast by the second switch 2, the first switch 1 decodes the wireless control signal based on the custom communication protocol, and controls the operating state of the first switch 1 according to a control instruction obtained by decoding the wireless control signal so as to control the operating state of the first electrical appliance connected to the first switch 1, thereby enabling direct connection and mutual control between the first switch 1 and the second switch 2. The wireless control signal may include, but is not limited to, one or a combination of switch information, MAC address information, key information, encryption information, authentication information, etc. Furthermore, in other examples, the second switch 2 can also be directly connected to the first switch 1 via a standard communication protocol, such as a standard Bluetooth communication protocol, a WIFI communication protocol, a ZIGBEE communication protocol, etc. As long as a direct wireless interaction relationship can be established between the first switch 1 and the second switch 2, a wireless signal generated by the second switch 2 can be directly sent to the first switch 1, regardless of which communication protocol is used, without departing from the scope described above.

In the prior art, two intelligent wall switches may communicate via some standard protocols (e.g., the Bluetooth protocol), which enables wireless signal interaction by means of forwarding by a gateway. For example, one intelligent wall switch sends a wireless signal to the gateway in response to an implement control operation, and the gateway forwards the wireless signal to the other intelligent wall switch to enable wireless interaction between the two intelligent wall switches. However, in this way, the two intelligent wall switches essentially communicate with the gateway respectively, and then perform signal parsing and forwarding via the gateway. This way depends on the network established by the gateway. When a problem occurs in the network of the gateway, such as network interruption or poor network conditions, the wireless interaction between the two intelligent wall switches will be affected, resulting in a delay or even failure in the control implemented by the user, and affecting the user experience. However, the first switch 1 and the second switch 2 in the embodiments may be wirelessly controlled in a direct connection manner. Namely, the interaction of wireless signals between the first switch 1 and the second switch 2 is performed directly, without forwarding via an intermediate other device such as a gateway. It avoids the problem that the first switch 1 and the second switch 2 cannot communicate when the network is interrupted during gateway forwarding, thereby failing to realize linkage control. Also, the direct connection between the first switch 1 and the second switch 2 in the embodiments is more efficient, faster and more stable than when the gateway forwarding information is affected by the network delay.

In the embodiment, a wireless interaction relationship is established by means of direct connection by using a first switch 1 and a second switch 2 both powered by the strong current. When the first switch 1 receives a wireless control signal sent by the second switch 2 in response to an implement control operation, the first switch 1 controls the operating state of the first electrical appliance connected thereto so as to match a control result indicated by the wireless control signal, thereby achieving mutual control between the intelligent wall switches powered by the strong current, so that the intelligent wall switch can not only serve as a controlled party, but also serve as a control party to achieve linkage control with other intelligent wall switches. The control mode of intelligent wall switch is effectively expanded to meet more diverse control requirements. At the same time, in the embodiments, the first switch 1 and the second switch 2 are both intelligent wall switches powered by the strong current, overcoming the defect that the wireless switches need to frequently replace batteries or have a poor hand feeling compared with controlling the intelligent wall switches by wireless switches. In addition, in the embodiments, by realizing the mutual control between the intelligent wall switches powered by strong current, the linkage control can be performed between the intelligent wall switches already installed in the user's home, without performing control by specially configuring a wireless switch for the intelligent wall switches, thus reducing the cost of realizing intelligent application for the user.

In some embodiments, the second switch includes a second indication unit and a second execution module. The functions and principles of the second indication unit, the second execution module and the other modules and units of the second switch are similar to those described above with regard to the first switch, and reference can be made to the above description of the first switch, which will not be repeated here. Herein, the second execution module is configured not to be directly or indirectly electrically connected to an electrical appliance. The first switch is further configured for controlling the first indication unit to switch to a corresponding indication state before, after or at the same time of controlling an operating state of a first electrical appliance in response to a wireless control signal. The second switch is configured for controlling the second execution module to maintain a preset operating state and controlling the second indication unit to generate a preset indication signal when the wireless control signal is generated and sent in response to an implement control operation. The preset indication signal is used for reminding a user of the current function of the second switch. Exemplarily, the preset indication signal is a breath lamp signal for reminding a user that the second switch currently only has a wireless remote control function. Of course, in some embodiments, the preset indication signal may also be implemented as a signal such as a fast flash signal, a slow flash signal or a normally-on signal. It is within the scope of the embodiments as long as the preset indication signal can have a reminding function.

In this example, after a wireless interaction relationship is established between the second switch and the first switch in a direct connection manner, when the second switch responds to an implement control operation, such as a user pressing a key of the second switch, a wireless control signal is generated and sent out, so that the first switch directly receives the wireless control signal, and controls the operating state of the first execution module to match with the control result indicated by the wireless control signal, so as to control the operating state of the first electrical appliance, thereby realizing the remote control of the first switch by the second switch.

In this embodiment, it can realize the wireless control between the first switch and the second switch which are powered by the strong current. The second switch can be used as a control party to remotely control the first switch, and a user can jointly control the first switch by manipulating the second switch, thus effectively expanding the control mode of the intelligent wall switch and facilitating to meet more diverse control requirements.

In some embodiments, the first switch is further configured for controlling the first indication unit to switch to a corresponding indication state before, after or at the same time of controlling an operating state of the first electrical appliance in response to a wireless control signal. The second switch is configured for controlling the indication state of the second indication unit to switch to coincide with the indication state of the first indication unit after the wireless control signal is generated and transmitted in response to an implement control operation.

In the embodiments, when the first switch controls the operating state of the first execution module in response to the wireless control signal, the first indication unit thereof is controlled to switch the indication state. For example, when the first execution module is controlled to switch from on to off, the first indication unit corresponding to the first execution module is controlled to switch from on to off by an indication lamp. At the same time, the second switch controls the indication state of the second indication unit thereof to switch to be consistent with the indication state of the first indication unit. For example, when the first indication unit switches to the indication lamp off state, the second switch controls the indication lamp of the second indication unit to also switch to the off state so as to synchronize with the state of the first indication unit.

The inventors of the present application have found that in the existing solution of controlling a wall switch by a wireless switch. Therefore, the wireless switch is used as a remote control of which the indication lamp is not synchronized with the indication state of the controlled wall switch when the controlled device (such as a light bulb) is on. For example, with regard to a self-generating wireless switch, since the power generated each time is limited, the indication lamp thereof is not sufficiently supported to be synchronized with the indication lamp state of the wall switch for a long time. However, in order to save battery power, the indication lamp of the wireless switch in a battery version is generally set to flash once only when the wireless switch is operated and then remain in an off state. The non-synchronization between the wireless switch and the indication lamp state of the wall switch controlled by the wireless switch results in that the user cannot know the operating state of the electrical appliance controlled by the wireless switch by the indication lamp state of the wireless switch, which may easily cause misoperation by the user. For example, when a switch includes a plurality of keys, and the plurality of keys correspondingly control different electrical appliances, a user cannot determine which appliance it controls according to the indicated state of each key. By way of example, a plurality of keys of a switch respectively control a top light, a down light, etc. in a room. When the operating states of the top light, the down light, etc. are different, and a user is required to control the operating state of one of the top light, etc. via the switch, and cannot determine which particular key corresponds to a controlled electrical appliance, a situation of control error may occur. For example, the user wants to turn off the top light but turns on the down light incorrectly, thus affecting the user experience.

However, in the embodiments, since the two intelligent wall switches are powered by the strong current, there is no need to worry about the power supply amount. When linkage control is performed, after controlling the operating state of the electrical appliance in response to the implement control operation, the indication states of the indication means of the first switch and the second switch can be synchronously switched. That is, the indication states of the indication means of the first switch and the second switch are consistent. Thus, a user can determine an operating state of an electric appliance according to an indication state of any one of the first switch or the second switch, or can determine a switch linked with the electric appliance according to the operating state of the electric appliance, so as to facilitate the user to perform accurate intelligent control to improve the user experience.

Specifically, in some embodiments, the second execution module of the second switch is configured for being in a no-load state, i.e., the second execution module is not directly or indirectly electrically connected to any electrical appliance. The second switch is further configured for when the wireless control signal is generated and sent in response to an implement control operation, controlling the operating state of the second execution module to match with the control result indicated by the wireless control signal, so that the indication state of the second indication unit is switched to coincide with the indication state of the first indication unit.

In the embodiment, the second execution module of the second switch is not connected to a load, but when the wireless control signal is generated and sent in response to an implement control operation, the operating state of the second execution module is also synchronously controlled to match with the control result indicated by the wireless control signal, so that the operating state of the second execution module is synchronized with the operating state of the first execution module. Herein, the operating state of the first execution module is controlled by the first switch after receiving the wireless control signal according to the control result indicated by the wireless control signal. A processor (e.g., a single chip microcomputer) of the second switch changes a display state (i.e., an on-off state) of the second unit by identifying an on-off state (i.e. the operating state) of the second execution module. Therefore, the first switch and the second switch can control the indication state of the corresponding indication unit according to the operating state of the respective execution modules, so as to realize that the indication state of the second indication unit is switched to be consistent with the indication state of the first indication unit when responding to an implement control operation.

In some embodiments, the second switch is further configured for when the wireless control signal is generated and transmitted in response to an implement control operation, controlling the second execution module to maintain a preset operating state, and the indication state of the second indication unit is controlled to switch to be consistent with the indication state of the first indication unit.

In the embodiment, the second switch controls a second execution module of the second switch to maintain a preset operating state in response to an implement control operation, for example, controlling the second execution module such as a relay to maintain a normally open or normally closed operating state, wherein the second execution module of the second switch may be configured not to be directly or indirectly electrically connected to any electrical appliance, namely, the second switch is not connected to a load. Also, after the second switch generates and transmits the wireless control signal in response to an implement control operation, the first switch controls an operating state of the first electrical appliance in response to the wireless control signal and controls the first indication unit to switch to a corresponding indication state. The second switch controls the indication state of the second indication unit to switch to be consistent with the indication state of the first indication unit. That is to say, in the embodiments, while realizing the remote control of the first switch by the second switch, even if the second execution module maintains a pre-set operating state, for example, the second execution module maintains a normally open state without being connected to a load. The second switch will control the indication state of the second indication unit thereof to switch to be consistent with the indication state of the first indication unit when responding to the implement control operation. At this moment, the indication state of the second indication unit is not used for indicating the operating state of the second execution module, but synchronously indicates the operating state of the first execution module, that is, indicating an operating state of the first electrical appliance connected to the first switch. This enables the indication states of the indication units of the first switch and the second switch to be switched synchronously, i.e., the indication states of the indication units of the first switch and the second switch coincide. It facilitates accurate intelligent control by a user according to an indication state of any one of the first switch or the second switch so as to enhance the user experience.

In some embodiments, the second execution module of the second switch is configured for disconnecting or connecting a power supply loop of a second electrical appliance, such as a live wire or a neutral wire in a circuit where the second electrical appliance is located. The second switch is further configured for controlling the second execution module to switch operating states to control the operating state of the second electrical appliance when the wireless control signal is generated and transmitted in response to an implement control operation. The first switch controls an operating state of the first electrical appliance in response to the wireless control signal.

In this example, the first switch and the second switch respectively control different electrical appliances. The first execution module of the first switch controls an operating state of the first electrical appliance, and the second execution module of the second switch controls an operating state of the second electrical appliance. The second switch, in response to an implement control operation applied to a key thereof, can control a local second execution module to switch operating states so as to control an operating state of the second electrical appliance. At the same time, the second switch also generates and sends out a wireless control signal. The first switch directly receives the wireless control signal, and controls an operating state of the first electrical appliance in response to the wireless control signal, so as to realize linkage control of the first electrical appliance and the second electrical appliance by wireless interaction between the first switch and the second switch. Here, when the first switch controls the operating state of the first electrical appliance in response to the wireless control signal, the first switch controls the operating state of the first execution module thereof to match with the control result indicated by the wireless control signal so as to control the operating state of the first electrical appliance. For example, in an alternative implementation, after the second switch adjusts the operating state of the second appliance in response to an implement control operation, the wireless control signal is transmitted such that the first switch controls the operating state of the first appliance to be adjusted to coincide with the operating state of the second appliance in response to the wireless control signal. Thus, in some application scenarios requiring synchronous control of two electrical appliances, the operating states of the two electrical appliances can be controlled synchronously with each other by means of two intelligent wall switches, e.g., synchronously controlling the synchronous switching on, off, etc. of different luminaires. In addition, in other alternative implementations, the first switch may be responsive to the wireless control signal to control the operating state of the first electrical appliance to be opposite to the operating state of the second electrical appliance, or to control the operating state of the first electrical appliance to change synchronously with the operating state of the second electrical appliance, such as to control an operating parameter of the first electrical appliance to be turned up or down synchronously with an operating parameter of the second electrical appliance, or to control an operating parameter of the first electrical appliance to be turned up and an operating parameter of the second electrical appliance to be turned down synchronously, etc. The operating parameters may include, but are not limited to, the color temperature and the brightness of the luminaire, the temperature of the air conditioner, the opening and closing degree of the curtain motor, etc. As long as the interaction between the first switch and the second switch via the wireless control signal realizes the linkage control between the different electric appliances, it does not depart from the scope described above.

Further, the second switch is configured for, when controlling the second execution module to switch the operating state, controlling the indication state of the second indication unit to switch to match with the current operating state of the second execution module. The first switch is further configured for controlling the first indication unit to switch to a corresponding indication state before, after or simultaneously with controlling the operating state of the first electrical appliance in response to the wireless control signal.

In the embodiment, when the first switch and the second switch are linked to control different electric appliances, the corresponding indication states can be synchronously adjusted so as to indicate the operating state of the electric appliance controlled by the switch to a user. For example, after the second switch adjusts the operating state of the second electrical appliance in response to an implement control operation, the indication state of the second indication unit thereof is controlled to switch to match with the operating state of the second electrical appliance, and a wireless control signal is generated and sent out, so that the first switch controls the operating state of the first electrical appliance to be adjusted to be consistent with the operating state of the second electrical appliance in response to the wireless control signal. Meanwhile, the first switch controls the first indication unit thereof to switch to the indication state corresponding to the operating state of the first electrical appliance. Thus, the indication state of the second indication unit is consistent with the indication state of the first indication unit. When the linkage control of the first electrical appliance and the second electrical appliance is realized, the synchronization control of the indication state of the indication lamp is achieved, so as to facilitate a user to perform accurate intelligent control according to the indication state of any one of the first switch or the second switch so as to improve the user experience.

As shown in Fig. 3, in some embodiments, the second switch sends out the wireless control signal in response to the implement control operation received at the key when the second execution module is controlled to switch the operating state. Namely, when a key is operated in the second switch, the second execution module corresponding to the operated key can be controlled to switch the operating state and can send out the wireless control signal. Thus, the second switch can both locally control the operating state of the second electrical appliance and wirelessly remotely switch the operating state of the first electrical appliance connected to the first switch. Further, the first switch is also capable of sending out a wireless signal in response to an implement control operation. The second switch is capable of receiving and controlling an operating state of the second electrical appliance in response to the wireless signal. In the embodiment, on the basis of realizing the wireless remote control of the first switch by the second switch, the first switch can also send a wireless signal to the second switch to wirelessly control the operating state of a second electrical appliance connected to the second switch when being subjected to an implement control operation, thereby realizing the wireless remote control of the second switch by the first switch.

Further, the first switch sends out the wireless signal when the power supply loop is connected or disconnected in response to an implement control operation. In the embodiment, when the first switch is manipulated to control the operating state of the first electrical appliance connected thereto, the first switch can also simultaneously send a wireless signal to the second switch to wirelessly control the operating state of the second electrical appliance connected to the second switch, thereby realizing mutual control of the first switch and the second switch, and further realizing linkage control of the first electrical appliance and the second electrical appliance.

In some embodiments, the first or second switch may include a plurality of keys, e.g., single-key, double-key, triple-key switches, etc. the first or second switch further including a plurality of sub-execution modules_{∘} Different sub-execution modules correspond to keys on a one-to-one basis. A key in the first switch can establish a pairing relationship with a key in the second switch so as to establish a wireless interaction relationship between the first switch and the second switch in a direct connection manner, thereby controlling the operating state of a corresponding sub-execution module. By way of example, the execution modules in the first switch and the second switch may use relays, and then a corresponding sub-execution module may be a relay channel. Each key corresponds to a relay channel. When the key is pressed, the switch may control the on and off of the corresponding relay channel, and control the on and off of the relay channel corresponding to the key paired therewith by an established wireless interaction relationship.

In addition, the first switch or second switch may further include a plurality of sub-indication units (e.g., LED indication lamps). Each key corresponds to a sub-indication unit. When the key is operated, such as pressed, or the operating state of a sub-execution module corresponding to the key changes, the indication state of the sub-indication unit corresponding to the key also changes synchronously (e.g., the LED indication lamps are on and off) so as to indicate a corresponding operating state to a user. For example, when two intelligent wall switches are under coordinated control and a key of one intelligent wall switch is operated to control the operating state of the corresponding sub-execution module to change, the indication state of the sub-indication unit corresponding to the key will also change. Correspondingly, the operating state of the sub-execution module corresponding to the key of another intelligent wall switch matched with the key will also change synchronously. Meanwhile, the indication state of the sub-indication unit corresponding to the key of the other intelligent wall switch will also change synchronously, so that when the intelligent wall switch is under coordinated control, the sub-execution module and the sub-indication unit of the intelligent wall switch can perform state synchronization.

In some embodiments, the first switch includes a first execution module, a first key, and a second key; the first execution module is configured for disconnecting or connecting the power supply loop of the first electrical appliance; the first switch is further configured for controlling the first execution module to switch the operating state in response to an implement control operation applied to the first key, and can send out a wireless signal in response to an implement control operation applied to the second key; and the second switch includes a third key and a fourth key; and the second switch is further configured for controlling the second execution module to switch the operating state in response to an implement control operation applied to the fourth key, and can send out the wireless control signal in response to an implement control operation applied to the third key.

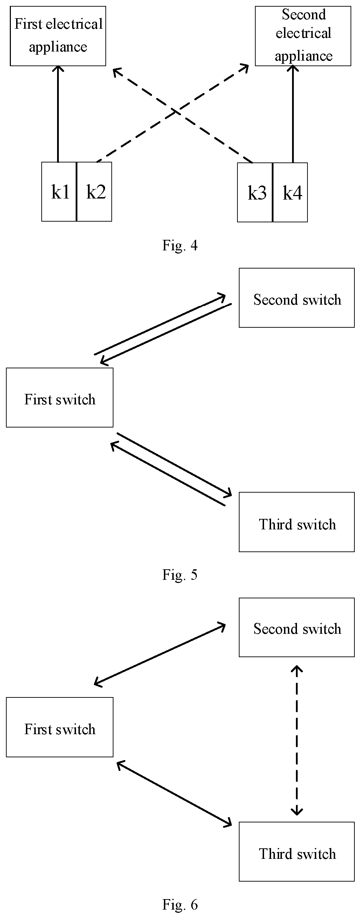

Specifically, in an alternative embodiment, as shown in Fig. 4, the first switch includes at least a first key k1 and a second key k2. The first switch further includes a first sub-execution module and a second sub-execution module corresponding to the first key and the second key. The second switch includes at least a third key k3 and a fourth key k4. The second switch further includes a third sub-execution module and a fourth sub-execution module corresponding to the third key and the fourth key.

Here, the first sub-execution module is used for disconnecting or connecting a live wire or a neutral wire in a circuit where the first electrical appliance is located. The first key k1 can control the operating state of the first sub-execution module in response to an actuation so as to control the operating state of the first electrical appliance. The fourth sub-execution module is used for disconnecting or connecting a live wire or a neutral wire in a circuit where the second electrical appliance is located, and the fourth key k4 can control the operating state of the fourth sub-execution module in response to an actuation so as to control the operating state of the second electrical appliance.

The first switch establishes a wireless interaction relationship with the second switch in a direct connection manner. Specifically, the first key k1 establishes a pairing relationship with the third key k3, and the second key k2 establishes a pairing relationship with the fourth key k4. The first switch can send out a wireless control signal in response to the actuation of the second key k2, so that the second switch receives and controls the operating state of the fourth sub-execution module in response to the wireless control signal so as to control the operating state of the second electrical appliance. The second switch can send out a wireless control signal in response to the actuation of the third key k3 such that the first switch controls the operating state of the first sub-execution module and thus the first electrical appliance by receiving and responding to the wireless control signal.

In the embodiment, by the mutual control among the intelligent wall switches, the intelligent wall switch can not only directly respond to local manipulation as a controlled party to control the operating state of one electrical appliance, but also serve as a control party to control the operating state of another electrical appliance connected to another intelligent wall switch via a direct wireless interactive mode, which effectively expands the control mode of the intelligent wall switch and facilitates to meet more diverse control requirements. For example, a first switch in the embodiments can be installed at a door opening in the bedroom, and a second switch can be installed at a bed head in the bedroom. A user can realize double-control over a first electrical appliance by operating a first key k1 in the first switch and a third key k3 in the second switch, and can also realize double-control over a second electrical appliance by operating a second key k2 in the first switch and a fourth key k4 in the second switch. The first electrical appliance and the second electrical appliance can be different controlled devices in the bedroom, such as a top light, a down light, etc. so as to realize double-control over a plurality of electric appliances by only two intelligent wall switches, enriching the control mode of intelligent wall switch. Furthermore, there is no need to specially configure a wireless switch for each intelligent wall switch to realize the double-control control of the electrical appliances connected to the intelligent wall switch, which greatly reduces the cost of intelligent application for users.

In some embodiments, when the first switch establishes a wireless interaction relationship with the second switch in a direct connection manner, the pairing between the first switch and the second switch is required to be performed. After the pairing is completed, the wireless signal interaction between the first switch and the second switch can be performed subsequently. For example, the second switch can directly send a wireless control signal generated thereby to the first switch with which the pairing is completed.

In an alternative implementation, the first switch is configured for,
before controlling the operating state of the first electrical appliance in response to a wireless control signal, being capable of entering a pairing mode, which may also be referred to as a learning mode, in response to a pairing operation (e.g., long pressing any key or a designated key in the first switch);
here, in the pairing mode, the first switch receives a pairing message sent by a second switch, for example, clicking any key or a designated key in the second switch to be paired to send out a pairing message; and the pairing message includes information for identifying the second switch, namely, source identification. Herein, the information identifying the second switch characterizes at least one of: the second switch; when pairing, the manipulated key received by the second switch; and a manipulation action received by a key in the second switch during the pairing. For example, the information identifying the second switch may include, but is not limited to, a vendor ID, an MAC address, a key value, etc. of the second switch.

The first switch stores information for identifying the second switch so as to complete the pairing with the second switch, thereby establishing a wireless interaction relationship with the second switch in a direct connection manner.

After the first and second switches have been paired, the second switch generates and transmits the wireless control signal in response to an implement control operation, wherein the wireless control signal includes information identifying the second switch. After receiving a wireless control signal, the first switch confirms that the information used for identifying the second switch in the wireless control signal matches with the information used for identifying the second switch stored by the first switch when pairing. For example, if it is confirmed that the information used for identifying the second switch in the wireless control signal is the same as the information used for identifying the second switch stored by the first switch when pairing, it is judged that only when the received wireless control signal passes the verification, and the operating state of the first electrical appliance is controlled in response to the wireless control signal. Otherwise, it does not respond to the wireless control signal.

In some embodiments, upon receipt of a wireless control signal by the first switch, if it is confirmed that the information identifying the second switch in the wireless control signal matches with the information identifying the second switch stored in the first switch, the operating state of the first switch may be controlled in response to the wireless control signal. For example, after confirming that the information for identifying the second switch matches, the first switch controls the switching state of the first execution module, such as a relay channel, so as to realize the remote control of the first switch by the second switch.

Further, in some embodiments, the wireless control signal includes, in addition to information identifying the second switch, an operating state identification indicating an operating state of the second switch. After receiving a wireless control signal, the first switch firstly verifies whether the information used for identifying the second switch in the wireless control signal matches with the information used for identifying the second switch stored in the first switch. If it is confirmed to match, according to the operating state identification obtained by parsing the wireless control signal, the operating state of the first switch is controlled to be synchronized with the operating state of the second switch so as to control the operating state of the first electrical appliance. In this example, when the second switch performs remote control on the first switch, the second switch can also carry its own state information via a wireless control signal, so that the first switch, after receiving the wireless control signal, synchronizes its own state to be consistent with the state of the second switch.

Further, on the basis that the remote control of the first switch by the second switch is realized as described above, the mutual control between the first switch and the second switch can also be realized by pairing the first switch and the second switch with each other. For example, after the first switch enters a learning mode, it clicks a second switch pairing, and the first switch stores information for identifying the second switch to complete the pairing. After the second switch enters the learning mode, the first switch pairing is clicked, and the second switch stores information for identifying the first switch to complete the pairing. Thus, after learning each other to complete the pairing, the first switch and the second switch can achieve the synchronization of operating states by the interaction of wireless control signals so as to achieve the mutual control between the first switch and the second switch.

Specifically, in an alternative embodiment, a short press followed by a long press of any key of the first switch may be performed, and the indication lamp flashes and then is released. When a short press followed by a long press of any key of the second switch is performed and the indication lamp of the first switch is off, the pairing is successful. After the pairing is completed, any one of the first switch or the second switch is clicked, and the execution modules of the first switch and the second switch, such as a relay and an indication lamp, are synchronized. If the first switch and the second switch can be connected to the terminal via the network, after clicking any one of the first switch or the second switch, the clicked state of the first switch and the second switch will also be synchronized in the terminal APP.

The inventors of the present application have found that when the above-mentioned pairing method pairs two or more intelligent wall switches to mutually control, the pairing is relatively cumbersome. As shown in Fig. 5, the first switch, the second switch and the third switch are taken as an example for explanation.

After the first switch and the second switch complete pairing, and the first switch and the third switch complete pairing, since a source identification of the first switch is stored in the second switch, and a source identification of the first switch is also stored in the third switch, mutual control between the second switch and the third switch cannot be realized. If the mutual control among the first switch, the second switch and the third switch is to be realized, the pairing between the second switch and the third switch also is required to be completed. Thus, if any mutual control to realize any mutual control of any two the first switch, the second switch or the third switch by means of the above-mentioned pairing method, the pairing is required to be performed six times. As the number of switches increases, the number of pairing times will also increase exponentially. When the number of intelligent wall switches required to realize mutual control is large, the pairing operation is too cumbersome, thus affecting the user experience.

Based on this, this example proposes a new pairing mode between intelligent wall switches to greatly reduce the pairing times when the number of switches is large. In the pairing mode, only when both the first switch and the second switch enter a pairing mode can pairing be completed, so as to realize direct connection mutual control between the first switch and the second switch. Specifically, the first switch enters a pairing mode in response to a pairing operation, and sends out a pairing message. The pairing message carries network identification information. The second switch receives the pairing message and stores the network identification information in the pairing message. At a specified time after the first switch enters the pairing mode, the second switch enters the pairing mode in response to a pairing operation, thereby completing pairing with the first switch to enable direct-connect mutual control between the first switch and the second switch.

In this example, the first switch and the second switch complete pairing by storing the same network identification information when pairing, and the network identification information is used for indicating that the first switch and the second switch are in the same control network, so that subsequent mutual control of the first switch and the second switch is also verified by the network identification information so as to respond to a wireless control signal.

In this way, after the other switches complete pairing with any one of the first switch or second switch, the network identification information is also stored in the other switches. Since the first switch and second switch store the same network identification information when pairing, mutual control between the other switches and the first switch and second switch can be realized. Compared with the above-mentioned pairing mode, since in the present pairing mode, each switch stores common network identification information (instead of source identification of each switch), the pairing and mutual control between three intelligent wall switches are realized in the embodiments. It is only paired twice, which greatly simplifies the process of mutual control pairing among intelligent wall switches, especially when realizing mutual control among multiple intelligent wall switches, it can effectively reduce the user's pairing operation and improve the user's experience.

For example, as shown in Fig. 6, the control system further includes a third switch that is powered by strong current. After the first switch and the second switch complete pairing for mutual control, and the first switch and the third switch complete pairing for mutual control, then the first switch, the second switch and the third switch all store the same network identification information, and then the second switch and the third switch automatically form a mutual control relationship. That is to say, mutual control among the first switch, the second switch and the third switch can be achieved without further performing a pairing operation between the second switch and the third switch.

Furthermore, by means of a pairing mode in which the first switch and the second switch store the same network identification information when pairing, when a third switch joins a control network of the first switch and the second switch, the order of operating the third switch to enter the pairing mode and operating the first switch or the second switch to enter the pairing mode is also not required. That is to say, whether the third switch is first operated to pair with the first switch or the second switch, or the first switch or the second switch is first operated to enter the pairing mode to pair with the third switch can realize the pairing among the first switch, the second switch and the third switch so as to facilitate user operation and improve the success rate of mutual control pairing of multiple intelligent wall switches.

Specifically, when a first switch and a second switch are paired, the first switch enters a pairing mode in response to a pairing operation and sends out a pairing message. The pairing message carries network identification information. Here, the network identification information can be randomly generated by the first switch, so that it can be guaranteed that the randomly generated network identification information is completely new at each time of re-pairing, and does not conflict with the previous information. For example, when the pairing is performed again after the first switch clears the joined network, new network identification information is randomly generated, and the new network identification information does not collide with the previously cleared network identification. The network identification information includes, but is not limited to, a random identification string generated by the first switch by means of a random algorithm of software or hardware, etc.

The second switch receives and stores the network identification information in the pairing message. Within the specified time after the first switch enters the pairing mode, the second switch enters the pairing mode in response to a pairing operation (e.g., long pressing any key or a designated key in the second switch) so as to complete the pairing with the first switch according to the network identification information. Here, the second switch receives and stores the network identification information in the pairing message before entering the pairing mode, specifically including the steps below: the second switch receives the pairing message before entering a pairing mode, and stores the network identification information in a second memory; after entering the pairing mode. The second switch completes the pairing with the first switch according to the network identification information, specifically includes the steps below: the second switch stores the network identification information in the second memory into the first memory; wherein the first memory and the second memory are different memories, and the first memory is a memory which does not lose data after power down, such as an flash memory. The second memory may be a memory that loses data after a power down, such as an ram memory, or a memory that does not lose data after a power down, but is of a different type or memory address from the second memory.

After the second switch completes the pairing, the pairing mode is exited, and a pairing success message is sent out. The pairing success message is used for indicating that the second switch is paired successfully. The first switch receives the pairing success message and stores the network identification information. For example, the network identification information randomly generated thereby is stored in a first memory thereof, such as an flash memory, so as to complete the pairing with the second switch.

In addition, a pairing message carrying network identification information sent out by a first switch in a pairing mode can be received by other switches. For example, the third switch stores the network identification information in the pairing message after receiving the pairing message, for example, temporarily storing the network identification information into a second memory, such as an ram memory, of the third switch. After receiving the pairing success message, the third switch confirms that the third switch is a non-pairing target object, and then the third switch automatically clears the network identification information stored in the ram memory so as to avoid a subsequent third switch learning the network identification information incorrectly during the pairing.

In another alternative embodiment, after receiving the pairing success message fed back by the second switch, the first switch sends out a pairing end message. After receiving the pairing end message, the third switch automatically clears the network identification information stored in the ram memory. In this embodiment, when the installation position of the intelligent wall switch is fixed, the pairing message sent by the first switch can be received by the third switch. After the pairing with the second switch is completed, a pairing end message is sent by the first switch, and then the third switch can also receive the pairing end message with a large probability. Thus, the temporarily stored network identification information can be cleared according to the pairing end message.

In the embodiments, the first switch sends out a pairing message carrying network identification information in a pairing mode, and all the other switches receiving the pairing message can temporarily store the network identification information. In response to an operation of a second switch to be paired by a user, the network identification information is stored so as to complete the pairing between the first switch and the second switch, and instruct the other switches to clear the temporarily stored network identification by a message fed back after the pairing is successful. By this pairing mode, the pairing between intelligent wall switches can be flexibly realized, and it can be more suitable for pairing between multiple intelligent wall switches.

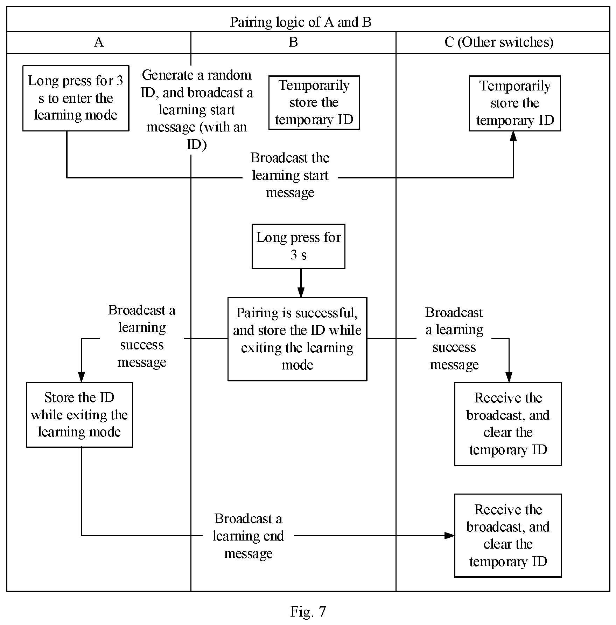

In one example, as shown in Fig. 7, the pairing of the key A of the first switch and the key B of the second switch is described as an example, wherein C is a key of other switches, such as a third switch.
(1) A enters a learning mode, i.e., a pairing mode, by being pressed for 3 s, broadcasts a pairing message, i.e., a learning start message, and randomly generates network identification information, such as a network ID, which may also be referred to as a random ID. Each intelligent wall switch can only temporarily store one network ID, and can be only added into one network ID.
(2) B and C temporarily store the temporary network ID after receiving the learning start message.
(3) If B enters the learning mode after a long press for 3 s and temporarily stores the network ID, the pairing succeeds, B stores the network ID, and broadcasts a pairing success message, namely, a learning success message; and at the same time, B exits the learning mode. Other keys (C) temporarily storing the ID clear the temporary network ID after receiving the learning success message. (It is also possible to wait for the learning end message sent by A instead of clearing at this time)
(4) After receiving the learning success message of B, A exits the learning mode and broadcasts a pairing end message, namely, a learning end message, and at the same time stores the network ID.
(5) Other keys (C) temporarily storing the ID clear the temporary network ID after receiving the learning end message.

After the second switch completes the pairing with the first switch, if a third switch is to join a control network of the first switch and the second switch, either one of the first switch and the second switch responds to a pairing operation to enter a pairing mode. Within a specified time after entering the pairing mode, the third switch responds to a pairing operation to enter the pairing mode, thereby completing the pairing among the first switch, the second switch and the third switch; or

The third switch enters a pairing mode in response to a pairing operation. Within the specified time after entering the pairing mode, either one of the first switch and the second switch enters the pairing mode in response to the pairing operation, thereby completing the pairing among the first switch, the second switch and the third switch.

Namely, if the third switch establishes a wireless interaction relationship with any one of the first switch or the second switch in a direct connection manner, the wireless interaction can be performed between any two of the first switch, the second switch or the third switch. In addition, whether the third switch is firstly operated to enter the pairing mode to pair with the first switch or the second switch, or the first switch or the second switch is firstly operated to enter the pairing mode to pair with the third switch, the pairing among the first switch, the second switch and the third switch can be realized.

In an implementation, if a first switch or a second switch is operated first, after entering a pairing mode in response to a pairing operation, either one of the first switch and the second switch broadcasts a pairing message carrying the network identification information, so that the third switch stores the network identification information in response to the pairing message, and completes the pairing with the first switch and the second switch after the third switch enters the pairing mode.

In another implementation, if a third switch is operated first, after entering a pairing mode, the third switch broadcasts a first pairing message carrying a random identification information. Here, the random identification information is randomly generated by the third switch.

After entering the pairing mode in response to a pairing operation, either one of the first switch and the second switch broadcasts a second pairing message carrying the network identification information. If the third switch receives the second pairing message, and confirms that the priority of the network identification information in the second pairing message is higher than that of the random identification information generated thereby, third switch stores the network identification information in the second pairing message so as to complete the pairing with the first switch and the second switch. For example, after receiving the second pairing message, if the third switch confirms that the network identification information is already existing network identification information, and characterizes that other switches, such as the first switch and the second switch, have completed the pairing with the network identification information and have formed a control network, the third switch confirms that the network identification information has a higher priority than that of the random identification information generated by itself. After the third switch completes the pairing, the third switch broadcasts out a pairing success message, and the pairing success message is used for indicating that the third switch is paired successfully, so that other switches which receive the first pairing message and temporarily store the random identification information clear the temporarily stored random identification information. In addition, after the third switch completes the pairing, the third switch clears the generated random identification information.

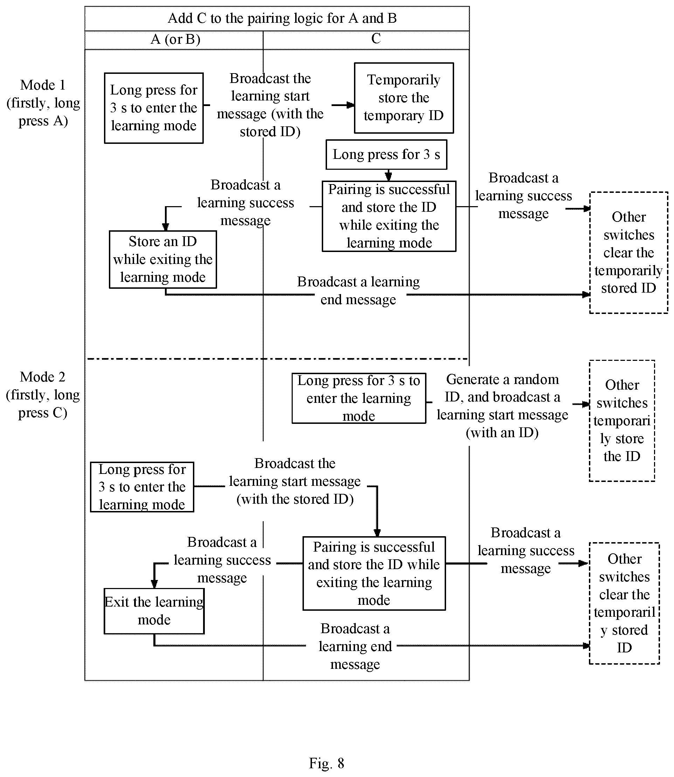

In addition, if the third switch receives a pairing success message sent by other switches before receiving the second pairing message, and the pairing success message is used for indicating that the other switches are paired successfully, the random identification information is stored so as to complete the pairing between the third switch and the other switches. After the third switch stores the random identification information, it further includes the steps that the third switch broadcasts out a pairing end message, so that the first switch and/or second switch which receives the pairing end message clears the stored random identification information. In the embodiment, after the third switch broadcasts out a first pairing message carrying the random identification information, if a pairing success message sent by other switches is received, it indicates that after the other switches receive the first pairing message, the random identification information is stored in a first memory thereof, such as an flash memory, to complete the pairing, and then the third switch also stores the random identification information so as to complete the pairing with the other switches. In one example, as shown in Fig. 8, after A and B have been paired, C wants to join the control network of A and B. In an embodiment, as shown in Fig. 7, if firstly a long press is performed on A (or B) and then a long press is performed on C, the process is the same as that described above for the pairing between A and B.

In another implementation, as shown in mode II in figure 7, if firstly a long press is performed on C first, C broadcasts a learning start message which carries a random ID randomly generated by C. Then, according to A (or B), A broadcasts a learning start message. The learning start message carries an already existing network ID (a stored network ID when A and B are paired). C will receive the learning start message broadcast by A, and store the network ID in the learning start message broadcast by A (the priority of the already existing network ID sent by A is higher than that of the random ID generated by C itself, and C chooses to store the network ID of A, and abandons the random ID generated by C itself). C sends a learning success message, and A sends a learning end message after receiving the same. Hereby, it is achieved that the control network of A and B can be joined even if C is operated first.

In some embodiments, within a specified time after entering the pairing mode, the first switch exits the pairing mode and broadcasts out a second specified message if receiving a specified trigger operation (for example, short pressing a key) for any key in the first switch. Alternatively, if the first switch does not receive a first specified message (such as a learning start message or a learning success message) within a specified time after entering the pairing mode, the first switch exits the pairing mode after the specified time ends and broadcasts out a second specified message (such as a learning end message). The second specified message characterizes the first switch exiting the pairing mode. The second specified message is used for triggering other switches receiving the pairing message to clear the stored network identification information, wherein the other switches do not complete the pairing with the first switch.

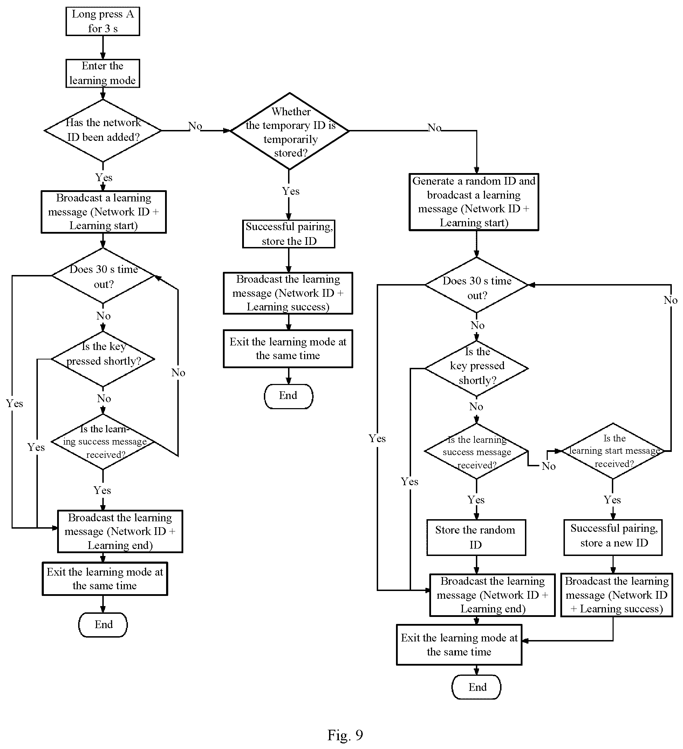

Exemplarily, as shown in Fig. 9, it is a schematic flow view of the key A of the first switch after entering a learning mode according to an example of the invention. Here, A is long pressed by 3s and enters the learning mode. A first switch judges whether A has joined a control network. For example, the first switch judges whether a network ID corresponding to A is stored in a first memory thereof, such as an flash memory. If so, it indicates that A has joined the network ID, and then broadcasts out a learning start message (with the network ID + a learning start event). At this time, after receiving the learning start message, other switches which do not join a network within a broadcast range temporarily store a temporary network ID. The first switch exits the learning mode when it is judged that the broadcast for 30 s times out, or exits the learning mode when it is judged that a key is pressed shortly, and exits the learning mode when it is judged that a learning success message is received. When it exits the learning mode, it will broadcast a learning end message (with the network ID + a learning end event).

If the first switch judges that A does not join a network ID, but temporarily stores a temporary ID, for example, the first switch judges that a network ID corresponding to A is not stored in a first memory thereof, such as an flash memory, but a temporary ID is stored in a second memory thereof, such as an ram memory, the temporary ID temporarily stored in the second memory is stored in the first memory thereof so as to be successfully paired with a key B broadcasting the temporary ID. Also, A broadcasts a learning success message (with a network ID + a learning success event), and exits the learning mode.

If the first switch judges that A neither joins the network ID nor temporarily stores the temporary ID, a random network ID is generated and a learning start message is broadcasted (with the random network ID + the learning start event). The first switch exits the learning mode when it is judged that the broadcast for 30 s times out, or exits the learning mode when it is judged that the key is pressed shortly. If a learning success message is received, the generated random network ID is stored and the learning mode is exited. The learning end message will be broadcast when the learning mode exits. If the learning success message is not received and the learning start message is received, the learning success message is broadcast according to the successful pairing of the learning start message and the new ID of the other party carried in the learning start message is stored, and the learning mode exits at the same time.

In some embodiments, upon completion of the pairing among the first switch, the second switch, and the third switch, any one of the first switch, the second switch, or the third switch generates and transmits a wireless control signal in response to an implement control operation. Any one the first, second, or third switches receiving the wireless control signal controls, in response to the wireless control signal, controls the corresponding operating state to match with the control result indicated by the wireless control signal.

Here, the wireless control signal carries network identification information (namely, a network ID) stored during the pairing among the first switch, the second switch and the third switch. Any one of the first switch, the second switch or the third switch receiving the wireless control signal controls, in response to the wireless control signal, a corresponding operating state to match with a control result indicated by the wireless control signal.

Specially, the switch receiving the wireless control signal confirms whether the network identification information in the wireless control signal matches with the network identification information stored therein, and if so, switches the operating state of the switch in response to the wireless control signal. If there is no match, it does not respond to the wireless control signal. For example, after confirming that the network ID carried in the wireless control signal is the same as the network ID stored in itself, the on-off state of the relay channel corresponding to the switch is controlled to be reversed in direct response to the wireless control signal.

Further, the wireless control signal further includes an operating state identification for indicating an operating state corresponding to a switch which sends out the wireless control signal. For example, the operating state identification may use different bit in a byte to represent the operating state of each key in the switch which sends the wireless control signal. For example, 0, 1 may be used to respectively represent the on-off state of the relay channel corresponding to the key. Any one of the first switch, the second switch or the third switch receiving the wireless control signal controls, in response to the wireless control signal, a corresponding operating state to match with a control result indicated by the wireless control signal.

Specially, after the switch receiving the wireless control signal confirms that the network identification information in the wireless control signal matches with the network identification information stored therein, the operating state of the switch receiving the wireless control signal is controlled according to the operating state identification in the wireless control signal to switch to be consistent with the operating state of the switch sending out the wireless control signal.

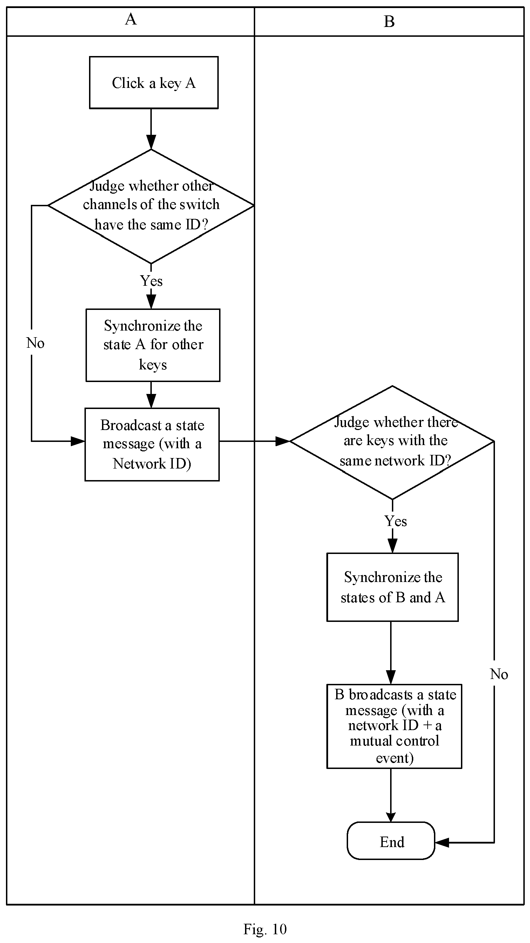

Exemplarily, as shown in Fig. 10, after the key A of the first switch completes the pairing with the key B of the second switch, the key A is clicked. Before the first switch broadcasts out a wireless control signal, it is determined whether there is a key in the first switch which is in the same network ID as the key A (because other keys in the same switch cannot receive the broadcast wireless control signal); and if so, the synchronization is performed. The first switch then broadcasts a control message (with a network ID + a first event type + an on/off state of the key A). After receiving the control message, B first judges whether the network IDs are the same, and if so, synchronizes with the state of A. B broadcasts a state message after synchronization, the state message having a network ID + a second event type.

It should be noted that in the embodiments, when a first event type is carried in a control message broadcast by a first switch, other switches which are in the same control network as the first switch, i.e., storing the same network identification information, will all be synchronized with a corresponding operating state, such as synchronized with an operating state of a relay channel corresponding to a pairing key. The first event type may include, but is not limited to, a power up event, a key press event, an APP event, a remote control event, etc.

However, after the other switches are in a synchronous operating state, a state message carrying a second event type is sent out. For example, if the second event type includes a mutual control event, the first switch or the switch receiving the state message does not respond to the state message, so as to avoid causing the sending cycle of the message to continue.

When a key in the first switch is manipulated in the embodiments, the custom message interaction with the second switch is performed based on a custom communication protocol so as to realize direct connection and mutual control between the first switch and the second switch. By way of example, in the embodiments, the message format for the first switch and the second switch to interact based on the custom communication protocol is as shown in Table 1 below. The custom message for the first switch and the second switch to interact includes a message type indication field for indicating the type of the message, such as a pairing message or a control message (such as a wireless signal sent by the first switch to the second switch in response to a control implement control operation, or a wireless control signal sent by the second switch to the first switch in response to a control implement control operation). The learning (0x00) type in Table 1 characterizes the message as a pairing message. The state (0x01) type characterizes the message as a control message. The message further includes a network identification field for indicating network identification information about the switch, which may be, for example, a 4-byte network ID. A device type field is used for indicating a switch type, such as a single-key switch, a double-key switch, and a triple-key switch; a key value field is used for indicating a key which is currently manipulated; an attribute field is used for indicating a message attribute, wherein the message attribute of the pairing message is different from the message attribute of the control message; the message attribute of the pairing message is used for indicating a pairing message type, and the message attribute of the control message is used for indicating a control event type; and For example, in the pairing message, the attribute field may indicate that the pairing message belongs to a learning start message, a learning success message or a learning end message, so that a switch receiving the pairing message performs corresponding processing according to the message attribute. In the control message, the attribute field may indicate an event type of the control message, such as the above-mentioned first event type power-on event, key event, APP event, remote control event, or second event type mutual control event, so that a switch which receives the control message performs corresponding control according to the event type. The state identification field is used for indicating the operating state information corresponding to the switch. For example, when the switch has a plurality of relay channels, each bit in 1 byte represents the on-off state of the relay channel corresponding to a key.

**Table 1**

| Message type | Message data | | | | |
|---|---|---|---|---|---|
| Learning 0x00 | Network ID (4 bytes) | Device type (1 byte) | Key value (1 byte) | 0x00 Learning start 0x01 Learning end 0x02 Learning success | |
| State 0x01 | Network ID (4 bytes) | Device type (1 byte) | Key value (1 byte) | 0x00 Power-on event 0x01 Key event 0x02 APP event | Operating state (1 byte, each bit represents the state of a key) |
| | | | | 0x03 Remote control event 0x04 Mutual control event | |

Exemplarily, taking the key A1 of the double-key switch A mutually controls the key B2 of the triple-key switch B as an example, the double-key switch device type is 0x52, the double-key switch device type is 0x53, and the device key values are 0x01, 0x02 and 0x04 respectively.

Firstly, A1 enters a pairing mode after a long press of 3 seconds, namely, a learning mode, and broadcasts a learning start message (1): 0x00 0x11 0x22 0x22 0x44 0x52 0x01 0x00.

After receiving the learning start message (1), B temporarily stores the network ID: 0x11 0x22 0x22 0x44, and B2 is long pressed for 3 seconds to enter a learning mode. Since there is a temporarily stored network ID, a learning success message is broadcast (2): 0x00 0x11 0x22 0x22 0x44 0x53 0x02 0x02.

At this time, B2 stores the network ID "0x11 0x22 0x22 0x440x11 0x22 0x22 0x44" to the flash storage unit of B2, indicating that B2 has joined the network ID. When subsequently clicking B2, it is firstly judged whether there is a network ID, if yes, broadcasting a message with the network ID, otherwise, not sending the same.

After receiving the learning success message (2) sent by B, A sends a learning end message (3): 0x00 0x11 0x22 0x22 0x44 0x52 0x01 0x01.

The other device receives the message (2) or (3) and cancels the temporary network ID. At the same time, A1 stores the network ID to A1's storage unit. Thereafter, after A1 is pressed and sends out a message carrying the network ID, B2 can parse the message. For example, when A1 is pressed, a control message is sent (4): 0x01 0x11 0x22 0x22 0x44 0x52 0x01 0x01 0x02 (i.e., the A1 state is OFF and the A2 state is ON).

After receiving B2, it is judged whether the current state of B2 is off, and if so, it does not performing any operation; otherwise, B2 completes the off operation to be consistent with the switching of the A1 state.

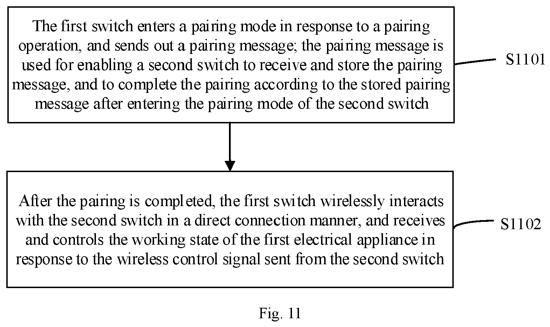

As shown in Fig. 11, the embodiments also discloses a processing method for an intelligent wall switch for pairing control of a first switch; the first switch is electrically connected to a power supply loop of a first electrical appliance and configured to control connecting and disconnecting of the power supply loop in response to an implement control operation; wherein the processing method includes the steps below:
S1101, the first switch enters a pairing mode in response to a pairing operation, and sends out a pairing message; the pairing message is used for enabling a second switch to receive and store the pairing message, and to complete the pairing according to the stored pairing message after entering the pairing mode of the second switch; and
S1102, after the pairing is completed, the first switch wirelessly interacts with the second switch in a direct connection manner, and receives and controls the operating state of the first electrical appliance in response to the wireless control signal sent from the second switch.

In some embodiments, the pairing message carries network identification information; and
the pairing message is used for enabling the second switch to receive and store the network identification information in the pairing message before entering the pairing mode, and to complete the pairing with the first switch according to the network identification information after entering the pairing mode.

In some embodiments, it further includes the steps below:
the pairing message is used to enable the second switch to receive the pairing message before entering the pairing mode, store the network identification information in a second memory, and store the network identification information in the second memory in a first memory after entering the pairing mode; wherein the first memory and the second memory are different memories, and the first memory is a memory which does not lose data after a power down.

In some embodiments, the network identification information is randomly generated by the first switch.

In some embodiments, after the first switch sends out a pairing message, the processing method further includes the steps below:
the first switch receives the pairing success message sent by the second switch; wherein the pairing success message is sent out after the second switch completes the pairing; and
the first switch stores the network identification information to complete the pairing with the second switch.

In some embodiments, the pairing message is further used for enabling a third switch to receive and store the network identification information in the pairing message; and
the pairing success message is also used for triggering the third switch to clear the stored network identification information after receiving the pairing success message.

In some embodiments, the pairing message is further used for enabling a third switch to receive and store the network identification information in the pairing message; and
the processing method further includes:
after the first switch stores the network identification information, sending out a pairing end message, wherein the pairing end message is used for enabling the third switch to clear the stored network identification information in response to the pairing end message.

In some embodiments, after the first switch completes the pairing with the second switch, the processing method further includes the steps below:
the first switch enters a pairing mode in response to a pairing operation, and sends out a pairing message, so that a third switch receives the pairing message, and enters a pairing mode of the third switch in response to a pairing operation within a specified time after the first switch enters the pairing mode, so as to complete the pairing among the first switch, the second switch and the third switch; or
within a specified time after a third switch enters a pairing mode in response to a pairing operation, the first switch enters the pairing mode in response to a pairing operation and sends out a pairing message to complete the pairing among the first switch, the second switch and the third switch.

In some embodiments, specifically, the processing method further includes the steps below:
after entering a pairing mode in response to a pairing operation, the first switch broadcasts a pairing message carrying the network identification information, so that the third switch stores the network identification information in response to the pairing message, and completes the pairing with the first switch and the second switch after the third switch enters the pairing mode.

In some embodiments, within a specified time after a third switch enters a pairing mode in response to a pairing operation, the first switch enters the pairing mode in response to a pairing operation and sends out a pairing message to complete the pairing among the first switch, the second switch and the third switch, specifically including:
the first switch receives a first pairing message carrying random identification information sent by the third switch, wherein the first pairing message is sent out after the third switch enters the pairing mode;
the first switch enters the pairing mode in response to a pairing operation, and broadcasts a second pairing message carrying the network identification information; and the second pairing message is used for enabling the third switch to receive and store network identification information in the second pairing message so as to complete the pairing among the first switch, the second switch and the third switch based on the network identification information.

In some embodiments, the processing method further includes the steps below:
the first switch receives a pairing success message sent by the third switch; the pairing success message is sent out after the third switch receives and stores network identification information in the second pairing message; the pairing success message is used for indicating that the third switch is paired successfully; and
the first switch exits the pairing mode in response to the pairing success message.

In some embodiments, the processing method further includes the steps below:
if receiving the pairing end message sent by the third switch, the first switch exits the pairing mode in response to the pairing end message; wherein the pairing end message is sent out after the third switch receives a pairing success message sent by a fourth switch and stores the random identification information so as to complete the pairing with the fourth switch.

In some embodiments, the processing method further includes the steps below:
within a specified time after entering the pairing mode, if receiving a specified trigger operation on any key of the first switch, the first switch exits the pairing mode, and broadcasts out a second specified message; or
within a specified time after entering the pairing mode, if not receiving a first specified message, the first switch exits the pairing mode after the specified time and broadcasts out a second specified message; wherein the second specified message characterizes the first switch exiting the pairing mode.

In some embodiments, the second specified message is used for triggering other switches receiving the pairing message to clear the stored network identification information, wherein the other switches do not complete the pairing with the first switch.

In some embodiments, the processing method further includes the steps below:
after the first switch completes the pairing with the second switch and the third switch, a wireless control signal is generated and sent in response to an implement control operation such that the second switch and the third switch perform corresponding control actions in response to the wireless control signal.

In some embodiments, the wireless control signal carries network identification information; the wireless control signal is also used to enable, after receiving the wireless control signal in the second switch and the third switch, confirming whether the network identification information in the wireless control signal matches with the locally stored network identification information, and if so, switching the operating state of the switch in response to the wireless control signal; and if there is no match, it does not respond to the wireless control signal.

In some embodiments, the wireless control signal further carries an operating state identification; the operating state identification is used for indicating an operating state corresponding to the first switch; the wireless control signal is also used to cause that the second switch and the third switch are responsive to the wireless control signal to switch the operating state to match with the operating state indicated by the wireless control signal.

The embodiments of the invention also provide an intelligent wall switch including any one of a first switch, a second switch, or a third switch for performing the processing method of the intelligent wall switch described above.

The embodiments of the invention also provide a computer-readable storage medium having stored thereon a computer program which, when executed by a processor, performs the method referred to above.

Those of ordinary skill in the art will appreciate that all or some of the steps to implement the method embodiments described above may be performed by hardware associated with program instructions. The aforementioned program may be stored in a computer-readable storage medium. The program, when executed, performs steps including the various method embodiments described above. The storage medium includes various media which can store program codes, such as ROM, RAM, magnetic or optical disks.

Finally, it should be noted that each example above are only intended to illustrate the technical solution of the invention, but not to limit it. Although the invention has been described in detail with reference to the each foregoing example, those skilled in the art will appreciate that the technical solutions of the each above-mentioned example can still be modified, or some of the technical features thereof can be equivalently substituted. Such modifications and substitutions will not cause the essence of the corresponding technical solutions to depart from the scope of the examples of the invention.

## Claims

1. A control system for an intelligent wall switch, **characterized by** comprising:
a first switch electrically connected to a power supply loop of a first electrical appliance and configured to control connecting or disconnecting of the power supply loop in response to an implement control operation;
a second switch comprising:
at least one key configured for receiving the implement control operation; and
a signal transmitting unit operatively coupled to the key and configured to send out a wireless control signal in response to the implement control operation received at the key;
wherein the first switch and the second switch both comprise at least one power supply port for accessing a live wire so as to access a strong electric power source, and the second switch performs wireless interaction with the first switch in a direct connection manner; and the first switch further comprises:
a signal receiving unit configured to receive and control a operating state of the first electrical appliance in response to the wireless control signal.

2. The control system according to claim 1, **characterized in that** the first switch comprises a first indication unit for indicating an operating state of the first switch; the second switch comprises a second indication unit; and
the first switch is further configured for controlling the first indication unit to switch to a corresponding indication state before, after or simultaneously with controlling the operating state of the first electrical appliance in response to the wireless control signal; and
the second switch is further configured for controlling the indication state of the second indication unit to be consistent with the indication state of the first indication unit after sending out a wireless control signal in response to an implement control operation received at the key.

3. The control system according to claim 2, **characterized in that** the first switch further comprises a first execution module for disconnecting or connecting the power supply loop of the first electrical appliance;
wherein the first switch controls the connecting or disconnecting of the power supply loop in response to an implement control operation, and is specifically configured for:
controlling, by the first switch, the first execution module to operate and thereby controlling the connecting or disconnecting of the power supply loop, in response to the implement control operation of the first switch;
the first execution module is controlled by the signal receiving unit; and the signal receiving unit receives and controls the operating state of the first electrical appliance in response to the wireless control signal, specifically for:
controlling, by the signal receiving unit, the operating state of the first execution module in response to the wireless control signal to match with the control result indicated by the wireless control signal, so as to control the operating state of the first electrical appliance.

4. The control system according to claim 2, **characterized in that** the second switch comprises a second execution module; the second execution module is configured for being in an unloaded state; the second switch is further configured for controlling an operating state of the second execution module to match a control result indicated by the wireless control signal when the wireless control signal is generated and sent in response to an implement control operation; and
the second switch controls the indication state of the second indication unit to switch to be consistent with the indication state of the first indication unit, and is specifically used for:
controlling, by the second switch, the indication state of the second indication unit according to the operating state of the second execution module, so that the indication state of the second indication unit is switched to be consistent with the indication state of the first indication unit.

5. The control system according to claim 2, **characterized in that** the second switch comprises a second execution module configured for maintaining a preset operating state.

6. The control system according to claim 1 or 2, **characterized in that** the second switch comprises a second execution module configured for disconnecting or connecting the power supply loop of a second electrical appliance; the second switch is further configured for controlling the second execution module to switch an operating state in response to the implement control operation received at the key so as to control a operating state of the second electrical appliance.

7. The control system according to claim 6, **characterized in that** the second switch is further configured for sending out the wireless control signal in response to the implement control operation received at the key when the second execution module is controlled to switch the operating state.

8. The control system according to claim 6 or 7, **characterized in that** the first switch is further configured for sending out a wireless signal in response to an implement control operation; and the second switch is configured for receiving and controlling an operating state of the second electrical appliance in response to the wireless signal.

9. The control system according to claim 8, **characterized in that** the first switch is further configured for sending out the wireless signal when the power supply loop of the first electrical appliance is controlled to be switched on or off in response to an implement control operation.

10. The control system according to claim 8, **characterized in that** the first switch comprises a first execution module, a first key, and a second key; the first execution module is configured for disconnecting or connecting the power supply loop of the first electrical appliance; the first switch is further configured for controlling the first execution module to switch the operatingstate in response to an implement control operation applied to the first key, and being capable of sending out a wireless signal in response to an implement control operation applied to the second key; and the second switch comprises a third key and a fourth key; and the second switch is further configured for controlling the second execution module to switch the operating state in response to an implement control operation applied to the fourth key, and being capable of sending out the wireless control signal in response to an implement control operation applied to the third key.

11. The control system according to any one of claims 1-5, **characterized in that** the first switch is further configured for
entering a pairing mode in response to a pairing operation before controlling the operating state of the first electrical appliance in response to the wireless control signal;
in the pairing mode, receiving a pairing message sent by a second switch, wherein the pairing message comprises a source identification of the second switch; and
storing the source identification of the second switch, and completing the pairing with the second switch so as to establish a wireless interaction relationship with the second switch in a direct connection manner.

12. The control system according to claim 11, **characterized in that** the wireless control signal comprises a source identification of the second switch; and the first switch controls the operating state of the first electrical appliance in response to the wireless control signal, and is specifically configured for
after receiving a wireless control signal, confirming that the source identification carried in the wireless control signal matches with the source identification stored in the first switch, and controlling the first electrical appliance to switch the operating state in response to the wireless control signal.

13. The control system according to claim 11, **characterized in that** the wireless control signal comprises a operating state identification for indicating the operating state of the second switch; and the first switch controls the operating state of the first electrical appliance in response to the wireless control signal, and is specifically configured for
after receiving a wireless control signal, parsing the wireless control signal to obtain the operating state identification, and controlling the operating state of the first switch to be synchronized with the operating state of the second switch according to the operating state identification so as to control the first electrical appliance to switch the operating state.

14. The control system according to any one of claims 1-5, **characterized in that** the first switch is further configured for
further entering a pairing mode in response to a pairing operation and sending out a pairing message before controlling the operating state of the first electrical appliance in response to the wireless control signal;
the second switch is further configured for receiving the pairing message, and entering a pairing mode of the second switch in response to a pairing operation within a specified time after the first switch enters the pairing mode, so as to complete the pairing with the first switch.

15. The control system according to claim 14, **characterized in that** the pairing message carries network identification information; and
the second switch is further configured for receiving and storing the network identification information in the pairing message before entering a pairing mode in response to a pairing operation, and completing the pairing with the first switch according to the network identification information after entering the pairing mode.

16. The control system according to claim 15, **characterized in that** the second switch is further configured for, after the pairing is completed, exiting the pairing mode and sending out a pairing success message, wherein the pairing success message is used for indicating that the second switch is paired successfully; and
the first switch is further configured for receiving the pairing success message, and storing the network identification information so as to complete the pairing with the second switch.

17. The control system according to claim 15 or 16, **characterized in that** the control system further comprises a third switch which is powered by strong current and is configured for:
if the third switch is paired with any one of the first switch or the second switch, the wireless interaction can be performed between any two of the first switch, the second switch or the third switch.

18. The control system according to claim 17, **characterized in that**, after the second switch completes the pairing with the first switch, either one of the first switch and the second switch enters a pairing mode in response to a pairing operation and sends out a pairing message; and within a specified time after entering the pairing mode, the third switch enters the pairing mode of the third switch in response to a pairing operation, thereby completing the pairing among the first switch, the second switch and the third switch; or
the third switch enters a pairing mode in response to a pairing operation; and within a specified time after entering the pairing mode, either one of the first switch and the second switch enters the pairing mode in response to the pairing operation, and sends out a pairing message, thereby completing the pairing among the first switch, the second switch and the third switch.

19. The control system according to claim 18, **characterized in that** after entering a pairing mode in response to a pairing operation, either one of the first switch and the second switch broadcasts a pairing message carrying the network identification information, so that the third switch stores the network identification information in response to the pairing message, and completes the pairing with the first switch and the second switch after the third switch enters the pairing mode.

20. The control system according to claim 18, **characterized in that** the third switch is configured for, after entering the pairing mode, broadcasting a first pairing message carrying random identification information; and
after entering the pairing mode in response to a pairing operation, either one of the first switch and the second switch broadcasts a second pairing message carrying the network identification information, so that the third switch receives and stores the network identification information in the second pairing message, thereby completing the pairing among the first switch, the second switch and the third switch.

21. The control system according to claim 20, **characterized in that** the third switch receives and stores network identification information in the second pairing message and is configured for
when receiving the second pairing message, the third switch stores network identification information in the second pairing message, and broadcasts out a pairing success message, wherein the pairing success message is used for indicating that the third switch is paired successfully.

22. The control system according to any one of claims 18-21, **characterized in that** the first switch, the second switch, and the third switch are collectively configured for:
after the pairing among the first switch, the second switch and the third switch is completed, any one of the first switch, the second switch or the third switch generates and sends a wireless control signal in response to an implement control operation; and the other two switches are arranged to perform corresponding control actions in response to the wireless control signal.

23. The control system according to claim 22, **characterized in that** the wireless control signal carries network identification information; any one of the first switch, the second switch or the third switch is further configured for confirming whether the wireless control signal is valid before responding to the wireless control signal; wherein if the network identification information in the wireless control signal matches with the locally stored network identification information, the wireless control signal is valid, and the operating state of the switch is switched in response to the wireless control signal; otherwise, the wireless control signal is not valid and it does not respond to the wireless control signal.

24. The control system according to claim 23, **characterized in that** the wireless control signal further carries an operating state identification; the operating state identification is used for indicating an operating state corresponding to a switch which sends out the wireless control signal; any one of the first switch, the second switch or the third switch which receives the wireless control signal performs a corresponding control action in response to the wireless control signal, and is configured for
after the switch which receives the wireless control signal confirms that the wireless control signal is valid, controlling the operating state of the switch which receives the wireless control signal to be consistent with the operating state of the switch sending out the wireless control signal according to the operating state identification in the wireless control signal.

25. A processing method for an intelligent wall switch, used in a first switch, **characterized in that** the first switch is electrically connected to a power supply loop of a first electrical appliance and configured to control connecting or disconnecting of the power supply loop in response to an implement control operation; wherein the processing method comprises the steps of:
the first switch enters a pairing mode in response to a pairing operation, and sends out a pairing message; the pairing message is used for enabling a second switch to receive and store the pairing message, and to complete the pairing according to the stored pairing message after entering the pairing mode of the second switch; and
after the pairing is completed, the first switch wirelessly interacts with the second switch in a direct connection manner, and receives and controls the operating state of the first electrical appliance in response to the wireless control signal sent from the second switch.

26. The processing method according to claim 25, **characterized in that** the pairing message carries network identification information; and
the pairing message is used for enabling the second switch to receive and store the network identification information in the pairing message before entering the pairing mode, and to complete the pairing with the first switch according to the network identification information after entering the pairing mode.

27. The processing method according to claim 26, **characterized by** further comprising the steps of:
the pairing message is used to enable the second switch to receive the pairing message before entering the pairing mode, store the network identification information in a second memory, and store the network identification information in the second memory in a first memory after entering the pairing mode; wherein the first memory and the second memory are different memories, and the first memory is a memory which does not lose data after a power down.

28. The processing method according to claim 26, **characterized in that** the network identification information is randomly generated by the first switch.

29. The processing method according to claim 26, **characterized in that** after the first switch sends out a pairing message, the processing method further comprises the steps of:
the first switch receives the pairing success message sent by the second switch; wherein the pairing success message is sent out after the second switch completes the pairing; and
the first switch stores the network identification information to complete the pairing with the second switch.

30. The processing method according to claim 29, **characterized in that** the pairing message is further used for enabling a third switch to receive and store the network identification information in the pairing message; and
the pairing success message is also used for triggering the third switch to clear the stored network identification information after receiving the pairing success message.

31. The processing method according to claim 29, **characterized in that** the pairing message is further used for enabling a third switch to receive and store the network identification information in the pairing message; and
the processing method further comprises:
after the first switch stores the network identification information, sending out a pairing end message, wherein the pairing end message is used for enabling the third switch to clear the stored network identification information in response to the pairing end message.

32. The processing method according to any one of claims 26-29, **characterized in that** after the first switch completes the pairing with the second switch, the processing method further comprises the steps of:
the first switch enters a pairing mode in response to a pairing operation, and sends out a pairing message, so that a third switch receives the pairing message, and enters a pairing mode of the third switch in response to a pairing operation within a specified time after the first switch enters the pairing mode, so as to complete the pairing among the first switch, the second switch and the third switch; or
within a specified time after a third switch enters a pairing mode in response to a pairing operation, the first switch enters the pairing mode in response to a pairing operation and sends out a pairing message to complete the pairing among the first switch, the second switch and the third switch.

33. The processing method according to claim 32, **characterized in that** the processing method specifically comprises the steps of:
after entering a pairing mode in response to a pairing operation, the first switch broadcasts a pairing message carrying the network identification information, so that the third switch stores the network identification information in response to the pairing message, and completes the pairing with the first switch and the second switch after the third switch enters the pairing mode.

34. The processing method according to claim 32, **characterized in that** within a specified time after a third switch enters a pairing mode in response to a pairing operation, the first switch enters the pairing mode in response to a pairing operation and sends out a pairing message to complete the pairing among the first switch, the second switch and the third switch specifically comprises the steps of:
the first switch receives a first pairing message carrying random identification information sent by the third switch, wherein the first pairing message is sent out after the third switch enters the pairing mode;
the first switch enters the pairing mode in response to a pairing operation, and broadcasts a second pairing message carrying the network identification information; and the second pairing message is used for enabling the third switch to receive and store network identification information in the second pairing message so as to complete the pairing among the first switch, the second switch and the third switch based on the network identification information.

35. The processing method according to claim 34, **characterized in that** the processing method further comprises the steps of:
the first switch receives a pairing success message sent by the third switch; the pairing success message is sent out after the third switch receives and stores network identification information in the second pairing message; the pairing success message is used for indicating that the third switch is paired successfully; and
the first switch exits the pairing mode in response to the pairing success message.

36. The processing method according to claim 34, **characterized in that** the processing method further comprises the steps of:
if receiving the pairing end message sent by the third switch, the first switch exits the pairing mode in response to the pairing end message; wherein the pairing end message is sent out after the third switch receives a pairing success message sent by a fourth switch and stores the random identification information so as to complete the pairing with the fourth switch.

37. The processing method according to claim 26, **characterized in that** the processing method further comprises the steps of:
within a specified time after entering the pairing mode, if receiving a specified trigger operation on any key of the first switch, the first switch exits the pairing mode, and broadcasts out a second specified message; or
within a specified time after entering the pairing mode, if not receiving a first specified message, the first switch exits the pairing mode after the specified time and broadcasts out a second specified message; wherein the second specified message characterizes the first switch exiting the pairing mode.

38. The processing method according to claim 37, **characterized in that** the second specified message is used for triggering other switches receiving the pairing message to clear the stored network identification information, wherein the other switches do not complete the pairing with the first switch.

39. The processing method according to any one of claims 33-38, **characterized in that** the processing method further comprises the steps of:
after the first switch completes the pairing with the second switch and the third switch, a wireless control signal is generated and sent in response to an implement control operation such that the second switch and the third switch perform corresponding control actions in response to the wireless control signal.

40. The processing method according to claim 39, **characterized in that** the wireless control signal carries network identification information; the wireless control signal is also used to enable, after receiving the wireless control signal in the second switch and the third switch, confirming whether the network identification information in the wireless control signal matches with the locally stored network identification information, and if so, switching the operating state of the switch in response to the wireless control signal; and if there is no match, it does not respond to the wireless control signal.

41. The processing method according to claim 40, **characterized in that** the wireless control signal further carries an operating state identification; the operating state identification is used for indicating an operating state corresponding to the first switch; the wireless control signal is also used to cause that the second switch and the third switch are responsive to the wireless control signal to switch the operating state to match with the operating state indicated by the wireless control signal.

42. The processing method according to any one of claims 25-31, 33-38, 40, or 41, **characterized in that** the processing method further comprises:
when a key in the first switch is manipulated, performing custom message interaction with the second switch based on a custom communication protocol; wherein the custom message comprises:
a message type indication field for indicating a message type, comprising a pairing message or a control message;
a network identification field for indicating network identification information about the first switch;
a device type field for indicating a switch type of the first switch;
a key value field for indicating a key of the first switch which is currently manipulated;
an attribute field for indicating a message attribute, wherein the message attribute of the pairing message is different from the message attribute of the control message; the message attribute of the pairing message is used for indicating a pairing message type, and the message attribute of the control message is used for indicating a control event type; and
an operating state identification field for indicating an operating state corresponding to the first switch.

43. An intelligent wall switch, **characterized in that** the intelligent wall switch is configured for performing the processing method according to any one of claims 25-42.
